# EUROPÄISCHE PATENTANMELDUNG

(11) **EP 4 446 157 A1**
(43) Veröffentlichungstag der Anmeldung: **16.10.2024**
(21) Anmeldenummer: 23167660.2
(22) Anmeldetag: 13.04.2023
(51) Int. Cl.: B60L 9/30, B60L 7/02, B60L 7/16

(54) **SCHIENENFAHRZEUG UMFASSEND EINE SYSTEMWAHLSCHALTERANORDNUNG SOWIE VERFAHREN ZUM UMSTELLEN EINES SCHIENENFAHRZEUGS VON DC-BETRIEB AUF AC-BETRIEB ODER VON AC-BETRIEB AUF DC-BETRIEB**

(71) Anmelder: Stadler Rail AG, 9565 Bussnang (CH)
(72) Erfinder: Ammann, Roger, 8553 Hüttlingen (CH)
(74) Vertreter: Hepp Wenger Ryffel AG

(57) **Zusammenfassung**

Die Erfindung betrifft ein Schienenfahrzeug mit einer Systemwahlschalteranordnung (11). Die Systemwahlschalteranordnung (11) ermöglicht ein Umschalten der Stromversorgung von AC nach DC. Die Systemwahlschalteranordnung (11) umfasst einen DC-Systemschalter (30), welcher in der DC-Versorgungsleitung (26) angeordnet ist. Ausserdem umfasst die Systemwahlschalteranordnung (11) einen AC-Systemschalter (32), welcher in der AC-Versorgungsleitung (27) angeordnet ist. Ausserdem umfasst die Systemwahlschalteranordnung (11) einen Umschalter (31), welcher an der Umschaltleitung angeordnet ist.

Ausserdem betrifft die Erfindung ein Verfahren zum Umstellen eines Schienenfahrzeugs von AC-Betrieb auf DC-Betrieb oder von DC-Betrieb auf AC-Betrieb.

## Beschreibung

Die folgende Erfindung betrifft ein Schienenfahrzeug mit einer Systemwahlschaltanordnung sowie ein Verfahren zum Umstellen eines Schienenfahrzeugs von DC-Betrieb auf AC-Betrieb oder von AC-Betrieb auf DC-Betrieb.

Elektrisch betriebene Schienenfahrzeuge sind aus dem Stand der Technik bekannt. Schienenfahrzeuge können dabei sowohl mit Gleichstrom als auch mit Wechselstrom betrieben werden. Es sind aus dem Stand der Technik auch Schienenfahrzeuge bekannt, welche sowohl mit Gleichstrom als auch mit Wechselstrom betrieben werden können. Derartige Schienenfahrzeuge können sowohl mit einer Stromversorgung von 750V, 1.5kV oder 3kV Gleichstrom und 15kV/16.7Hz oder 25kV/50Hz Wechselstrom betrieben werden. Solche Fahrzeuge sind somit dazu ausgebildet, sowohl auf einem Gleichspannungssystem als auch auf einem Wechselspannungssystem zu fahren und an Systemwechselstellen von dem Gleichspannungssystem in das Wechselspannungssystem oder von dem Wechselspannungssystem in das Gleichspannungssystem zu fahren und zwischen den Systemen zu wechseln.

An der Systemwechselstelle kann das Schienenfahrzeug kurzzeitig nicht mit dem elektrischen Strom versorgt werden, wenn das Schienenfahrzeug die Systemwechselstelle durchfährt. Dies hat zur Folge, dass Stromverbraucher eines Schienenfahrzeugs wie beispielsweise die Innenbeleuchtung des Schienenfahrzeugs oder eine Klimaanlage des Schienenfahrzeugs nicht durchgängig betrieben werden können. Für Fahrgäste, welche sich in dem Schienenfahrzeug befinden, während das Schienenfahrzeug die Systemtrennstelle passiert, ist dies unangenehm und senkt den Fahrkomfort.

Im Stand der Technik offenbarte Schienenfahrzeuge weisen somit den Nachteil auf, dass Verbraucher der Schienenfahrzeuge an einer Systemwechselstelle nicht durchgehend mit dem elektrischen Strom versorgt werden können. Ausserdem sind derartige Schienenfahrzeuge nur kompliziert und langsam von AC-Betrieb auf DC-Betrieb oder von DC-Betrieb auf AC-Betrieb umschaltbar.

Es ist daher die Aufgabe der Erfindung, die Nachteile des Standes der Technik zu überwinden und insbesondere ein Schienenfahrzeug zu schaffen, welches einfach und sicher von AC-Betrieb auf DC-Betrieb oder von DC-Betrieb auf AC-Betrieb umgeschaltet werden kann und welches insbesondere auch an einer Systemwechselstelle seine Verbraucher durchgängig mit dem elektrischen Strom versorgen kann.

Die Aufgabe wird durch ein Schienenfahrzeug umfassend eine Systemwahlschaltanordnung sowie ein Verfahren zum Umstellen eines Schienenfahrzeugs von DC-Betrieb auf AC-Betrieb oder von AC-Betrieb auf DC-Betrieb gemäss den unabhängigen Patentansprüchen gelöst.

Insbesondere wird die Aufgabe durch ein Schienenfahrzeug gelöst, welches die folgenden Bestandteile umfasst:
- Einen Stromabnehmer,
- einen Transformator umfassend eine Primärseite und eine Sekundärseite,
- eine AC-Leitung, die den Stromabnehmer mit dem Transformator verbindet, wobei zwischen AC-Leitung und Stromabnehmer ein AC-Hauptschalter angeordnet ist,
- eine DC-Leitung, die den Stromabnehmer mit einem Gleichspannungszwischenkreis verbindet, wobei zwischen Stromabnehmer und DC-Leitung ein DC-Trennschalter angeordnet ist,
- einen Netzstromrichter, der zwischen Transformator und Gleichspannungszwischenkreis angeordnet ist,
- eine DC-Versorgungsleitung, die die DC-Leitung mit der Sekundärseite des Transformators verbindet,
- eine AC-Versorgungsleitung, die die Sekundärseite des Transformators oder eine Drossel mit dem Netzstromrichter verbindet,
- eine Umschaltleitung, die die Sekundärseite des Transformators oder eine Drossel mit dem Netzstromrichter oder mit dem Gleichspannungszwischenkreis verbindet.

Die AC-Leitung kann eine AC-Dachleitung sein. Die DC-Leitung kann eine DC-Dachleitung sein. Zwischen dem Stromabnehmer und der DC-Leitung kann ein DC-Schnellschalter angeordnet sein.

Das Schienenfahrzeug umfasst eine Systemwahlschalteranordnung. Die Systemwahlschalteranordnung ermöglicht ein Umstellen der Stromversorgung von AC nach DC. Die Systemwahlschalteranordnung weist einen DC-Systemschalter auf. Der DC-Systemschalter ist in der DC-Versorgungsleitung angeordnet. Die Systemwahlschalteranordnung umfasst einen AC-Systemschalter. Der AC-Systemschalter ist in der AC-Versorgungsleitung angeordnet. Die Systemwahlschalteranordnung umfasst einen Umschalter. Der Umschalter ist in der Umschaltleitung angeordnet.

Ein solches Schienenfahrzeug kann durch eine Betätigung der Systemwahlschalteranordnung einfach und sicher von AC-Betrieb auf DC-Betrieb oder von DC-Betrieb auf AC-Betrieb umgestellt werden.

Bei dem DC-Strom kann es sich um einen Strom mit 700, 1500 oder 3000 Volt Gleichspannung handeln. Bei dem AC-Strom kann es sich um einen Strom mit einer Wechselspannung von 15 kV handeln. Es ist möglich, dass durch die Steuerung sämtliche Schalter der Systemwahlschalteranordnung simultan umschaltbar ausgebildet sind. Dann werden sowohl der DC-Systemschalter als auch der AC-Systemschalter und der Umschalter im Wesentlichen simultan geschaltet, wenn das Schienenfahrzeug von AC-Betrieb in DC-Betrieb oder von DC-Betrieb in AC-Betrieb geschaltet wird. Es ist möglich, dass der AC-Hauptschalter auf dem Dach des Schienenfahrzeuges angeordnet ist. Es ist möglich, dass der DC-Trennschalter auf dem Dach des Schienenfahrzeugs angeordnet ist. Es ist auch möglich, dass der DC-Schnellschalter auf dem Dach des Schienenfahrzeugs angeordnet ist. Der AC-Hauptschalter, der DC-Trennschalter als auch der DC-Schnellschalter können als mechanische Schalter ausgebildet sein.

Das Schienenfahrzeug kann einen oder mehrere Stromabnehmer umfassen. Es ist möglich, dass das Schienenfahrzeug einen AC-Stromabnehmer und einen DC-Stromabnehmer aufweist. Dann ist der AC-Stromabnehmer mit der AC-Leitung verbunden und der DC-Stromabnehmer ist mit der DC-Leitung verbunden. Das Schienenfahrzeug kann eine Überprüfungseinheit umfassen, die überprüfen kann, ob der Stromabnehmer mit Strom beaufschlagt ist.

Es ist möglich, dass die Sekundärseite des Transformators mehrere Ausgänge umfasst. Der Transformator kann zusätzliche Schalter umfassen, die zwischen mehreren Ausgängen des Transformators umschalten können. Dann sind durch die unterschiedlichen Ausgänge verschiedene Spannungen abrufbar und durch die zusätzlichen Schalter sind weitere Bauteile mit einer unterschiedlichen Spannung beaufschlagbar.

Der Umschalter kann in einer AC-Stellung den Netzstromrichter mit der Sekundärseite des Transformators verbinden. In einer DC-Stellung kann der Umschalter den Netzstromrichter mit der Masse verbinden.

Durch diese Stellungen des Umschalters kann ein sicherer Betrieb in der AC-Stellung gewährleistet werden und in der DC-Stellung kann gewährleistet werden, dass der Netzstromrichter zumindest teilweise geerdet ist, wobei insbesondere das Minus Gleichspannungszwischenkreises mit dem Schienenpotential verbunden ist. So kann das Schienenfahrzeug sowohl im AC-Betrieb als auch im DC-Betrieb sicher betrieben werden.

Die Verbindung mit der Masse kann beispielsweise dadurch gewährleistet sein, dass das Schienenfahrzeug über zumindest ein Rad mit der Schiene verbunden ist, wobei die Schiene mit der Masse verbunden und somit geerdet ist. Dann ist das Schienenfahrzeug über zumindest ein Rad und zumindest eine Schiene mit der Erde verbunden.

Der AC-Systemschalter kann in einer AC-Position den Netzstromrichter mit der Sekundärseite des Transformators verbinden. Der AC-Systemschalter kann in einer DC-Position den Netzstromrichter mit der Sekundärseite des Transformators als Drossel verbinden. Zusätzlich kann eine Zusatzdrossel ausgebildet sein. Ausserdem ist es möglich, dass der AC-Systemschalter in der AC-Position den Netzstromrichter mit der Sekundärseite des Transformators verbindet und in der DC-Position die Verbindung von Netzstromrichter und Sekundärseite des Transformators unterbricht.

Durch eine Verbindung mit der Drossel, und insbesondere auch mit der Zusatzdrossel, ist gewährleistet, dass die Ströme geglättet werden. Dadurch ist ein zuverlässiger Betrieb des Schienenfahrzeugs möglich.

Der Umschalter kann in einer AC-Position den Netzstromrichter mit der Sekundärseite des Transformators verbinden. In einer DC-Position kann der Umschalter die Verbindung trennen.

Der DC-Systemschalter kann in einer AC-Position die DC-Leitung mit der Masse verbinden. Der DC-Systemschalter kann in einer DC-Position die DC-Leitung mit der Sekundärseite des Transformators als Drossel verbinden.

Der Gleichspannungszwischenkreis kann mit einer Energieversorgungsquelle verbunden sein. Die Energieversorgungsquelle kann als Traktionsumrichter ausgebildet sein. Durch den Traktionsumrichter kann mit dem von den Traktionsmotoren im Bremsbetrieb generierte Wechselstrom Gleichstrom für den Gleichspannungszwischenkreis bereitgestellt werden. Dies wird als Stützbremsbetrieb bezeichnet. Alternativ kann als Energieversorgungsquelle auch eine Batterie oder ein Supercap (Superkondensator) verwendet werden.

Durch die Anordnung einer Energieversorgungsquelle ist gewährleistet, dass der Gleichspannungszwischenkreis mit dem elektrischen Strom beaufschlagt werden kann, auch wenn das Schienenfahrzeug nicht über eine Oberleitung oder eine Stromschiene und einen Stromabnehmer mit dem elektrischen Strom beaufschlagt ist. Somit ist bei dieser Anordnung gewährleistet, dass über den Gleichspannungszwischenkreis Verbraucher des Schienenfahrzeugs mit Strom beaufschlagt werden können, auch wenn das Schienenfahrzeug nicht über eine Oberleitung und einen Stromabnehmer mit dem elektrischen Strom beaufschlagt wird. Wenn ein Schienenfahrzeug bei einer Systemwechselstelle von einem AC-System in ein DC-System oder von einem DC-System in ein AC-System wechselt, weist das Schienenfahrzeug eine bestimmte Geschwindigkeit und somit eine bestimmte kinetische Energie auf. Beim Durchfahren der Systemwechselstelle, wenn das Schienenfahrzeug nicht durch eine externe Stromversorgung mit Strom versorgt wird, werden die Traktionsmotoren in den Bremsbetrieb geschaltet, als Generatoren betrieben und wandeln somit kinetischen Energie des Schienenfahrzeugs in elektrische Energie um. Diese elektrische Energie, welche in Form von Wechselstrom vorliegt, kann anschliessend durch einen Traktionsumrichter in Gleichstrom umgewandelt und in den Gleichspannungszwischenkreis eingespeist werden. Somit ist gewährleistet, dass der Gleichspannungszwischenkreis in jedem Betriebszustand des Schienenfahrzeugs mit dem elektrischen Strom beaufschlagt werden kann. Des Weiteren ist es so möglich die Druckluftversorgung aufrechtzuerhalten, da die Kompressoren weiterbetrieben werden können. Zusätzlich ist es schnell möglich wieder Zugkraft zu erzeugen, was insbesondere bei Systemwechseln im Bereich von Steigungen wichtig ist.

Das Schienenfahrzeug wird im DC-Betrieb über eine Oberleitung mit DC-Strom versorgt und im AC-Betrieb wird das Schienenfahrzeug über eine Oberleitung mit AC-Strom versorgt. Durch die Stromversorgung des Schienenfahrzeugs im AC-Betrieb oder im DC-Betrieb mit elektrischem Strom von einer Oberleitung kann somit auch der Gleichspannungszwischenkreis mit dem elektrischen Strom versorgt werden. Beim Wechsel des Schienenfahrzeugs von einem AC-System in ein DC-System oder vom DC-System in ein AC-System wird der Gleichspannungszwischenkreis an einer Systemwechselstelle, an der das Schienenfahrzeug nicht über eine Oberleitung mit dem elektrischen Strom versorgt wird, durch die Energieversorgungsquelle mit dem elektrischen Strom versorgt. Dadurch ist gewährleistet, dass der Gleichspannungszwischenkreis sowohl in dem AC-System als auch im DC-System und beim Wechsel zwischen den Systemen an einer Systemwechselstelle im Wesentlichen ununterbrochen mit dem elektrischen Strom versorgbar ist.

Es ist möglich, dass ein Traktionsmotor des Schienenfahrzeugs im Bremsbetrieb als Generator betrieben wird und generatorisch Wechselstrom generiert. Es ist auch möglich, dass mehrere Traktionsmotoren oder sämtliche Traktionsmotoren des Schienenfahrzeugs in Bremsbetrieb als Generatoren betrieben werden und generatorisch Wechselstrom generieren.

In der AC-Versorgungsleitung kann ein Linienschütz ausgebildet sein. Der Linienschütz kann zwischen dem Systemschalter und dem Netzstromrichter ausgebildet sein.

Das Linienschütz kann als elektromechanischer Schalter ausgebildet sein. Dann kann der Stromfluss zu den Fahrmotoren mechanisch getrennt werden. Dadurch kann verhindert werden, dass Schäden durch Überhitzung oder Überlastung an den Motoren auftreten. Durch die Anordnung eines Linienschütz kann somit eine Beschädigung oder ein Defekt der Fahrmotoren durch eine Überlastung verhindert werden und das Schienenfahrzeug kann sicher betrieben werden.

Parallel zu dem Linienschütz kann ein Vorladeschütz mit einem Widerstand angeordnet sein.

Durch die Anordnung eines Vorladeschützes mit einem Widerstand parallel zudem Linienschütz ist es möglich, den Strom und die Spannung, mit denen die Motoren beaufschlagt werden, zu begrenzen und so beim Laden des Zwischenkreises zu grosse Stromspitzen zu verhindern. Es ist möglich, dass der Vorladeschütz sowohl einen Widerstand als auch einen Schalter umfasst.

Ein Zwischenkreisschalter kann in einer DC-Position das Minuspotential des Zwischenkreises erden.

Durch die Erdung des Minuspotentials des Zwischenkreises in der DC-Position ist gewährleistet, dass Rückstrom über die Schienen geleitet werden kann.

Es ist möglich, dass der Gleichspannungszwischenkreis mit einem Hilfsbetriebeumrichter verbunden ist.

Durch die Anordnung eines Hilfsbetriebeumrichters im Gleichspannungszwischenkreis ist gewährleistet, dass Hilfsbetriebe des Schienenfahrzeugs ordnungsgemäss mit dem elektrischen Strom aus dem Gleichspannungszwischenkreis versorgt werden können.

Zwischen dem AC-Systemschalter und der Sekundärseite des Transformators kann ein AC-Spannungswahlschalter angeordnet sein.

Durch die Anordnung eines AC-Spannungswahlschalters ist es möglich, im AC-Betrieb den Netzstromrichter mit unterschiedlichen Ausgängen der Sekundärseite des Transformators zu beaufschlagen. Dann wird im AC-Betrieb die Sekundärseite des Transformators mit unterschiedlich vielen Wicklungen betrieben. Somit entstehen verschiedene Spannungen an den Ausgängen des Transformators, zwischen denen durch ein Umschalten des AC-Systemwahlschalters gewählt werden kann. Dadurch kann das Schienenfahrzeug im AC-Betrieb flexibel und sicher betrieben werden. Durch den AC-Systemwahlschalter wird somit ermöglicht, zwischen verschiedenen Eingangsspannungen, mit dem die Primärseite des Transformators beaufschlagt wird, eine entsprechende Ausgangsspannung des Transformators für den Betrieb des Schienenfahrzeuges zu wählen. Es ist möglich, dass durch den AC-Systemwahlschalter ein Betrieb des Schienenfahrzeugs beispielsweise mit einer Spannung von 15 kV ,25 kV oder 50 kV wählbar ist. Somit kann durch den AC-Systemwahlschalter der Netzstromrichter mit unterschiedlichen Ausgängen der Sekundärseite des Transformators verbunden werden und das Schienenfahrzeug kann mit unterschiedlichen AC-Spannungen betrieben werden.

Der Gleichspannungszwischenkreis kann mit einem Bremswiderstand verbunden sein. Der Gleichspannungszwischenkreis kann auch mit einem DC/DC-Wandler und einem Bremswiderstand verbunden sein.

Durch diese Anordnung ist es möglich, überschüssige Energie zu dissipieren.

Die Aufgabe der Erfindung wird ausserdem gelöst durch ein Verfahren zum Umstellen eines Schienenfahrzeuges von AC-Betrieb auf DC-Betrieb oder von DC-Betrieb auf AC-Betrieb. Bei dem Schienenfahrzeug handelt es sich insbesondere um ein Schienenfahrzeug wie vorhergehend beschrieben. Das Verfahren umfasst die folgenden Schritte für die Umstellung von AC-Betrieb auf DC-Betrieb: ,
- AC-Hauptschalter öffnen,
- Linienschütz öffnen,
- Fehlerdetektion des Netzstromrichters ausschalten
- Umschalten der Systemwahlschalteranordnung von AC-Betrieb auf DC-Betrieb,
- Umschalten des Netzstromrichters von AC-Betrieb auf DC-Betrieb,
- Fehlerdetektion des Netzstromrichters einschalten,
- Linienschütz schliessen
- Schliessen des DC-Trennschalters und insbesondere des DC-Schnellschalters.

Für die Umstellung von DC-Betrieb auf AC-Betrieb umfasst das Verfahren die folgenden Schritte:
- DC-Trennschalter und insbesondere DC-Schnellschalter öffnen,
- Linienschütz öffnen,
- Umschalten der Systemwahlschalteranordnung von DC-Betrieb auf AC-Betrieb,
- Umschaltbefehl an den Netzstromrichter von DC-Betrieb auf AC-Betrieb,
- Linienschütz schliessen,
- AC-Hauptschalter schliessen.

Die Schalter der Systemwahlschalteranordnung werden beim Umstellen von AC-Betrieb zu DC-Betrieb und/oder beim Umstellen von DC-Betrieb zu AC-Betrieb im Wesentlichen gleichzeitig geschaltet.

Durch das Verfahren kann ein Schienenfahrzeug schnell, sicher und unkompliziert von AC-Betrieb zu DC-Betrieb oder von DC-Betrieb zu AC-Betrieb umgeschaltet werden. Das Verfahren hat im Wesentlichen dieselben Vorteile wie ein Schienenfahrzeug wie vorhergehend beschrieben.

Das Verfahren wie vorhergehend beschrieben kann die folgenden weiteren Verfahrensschritte umfassen:
- Sperren des Netzstromrichters, bevor die Fehlerdetektion des Netzstromrichters ausgeschaltet wird,
- Netzstromrichter entsperren, nachdem die Systemwahlschalteranordnung von AC-Betrieb auf DC-Betrieb umgeschaltet wurde,
- Optional, Sperren der Systemwahlschalteranordnung, bevor die Fehlerdetektion des Netzstromrichters ausgeschaltet wird,
- Optional, Aufheben der Sperre der Systemwahlschalteranordnung, nachdem die Fehlerdetektion des Netzstromrichters ausgeschaltet wurde.

Durch das Sperren und Entsperren des Netzstromrichters ist gewährleistet, dass der Netzstromrichter nicht ungewollt umgeschaltet werden kann. Dadurch wird eine Beschädigung des Netzstromrichters und von weiteren Bauteilen des Schienenfahrzeugs verhindert.

Alternativ oder zusätzlich zu dem Verfahren wie oben beschrieben wird die Aufgabe der Erfindung gelöst durch ein Verfahren zum Umstellen eines Schienenfahrzeugs, wobei während des Umstellens an einer Systemwechselstelle eine Energieversorgungsquelle einen Gleichspannungszwischenkreis mit Energie versorgt. Bei dem Schienenfahrzeug kann es sich um ein Schienenfahrzeug wie vorhergehend beschrieben handeln. Die Energieversorgungsquelle kann einen generatorisch betriebener Traktionsmotor sein. Alternativ kann auch eine Batterie oder eine Supercap verwendet werden. Die Systemtrennstelle kann ohne anzuhalten bevorzugt im Stützbremsbetrieb durchfahren werden.

Die Versorgung des Gleichspannungszwischenkreises mit Energie während des Umschaltvorgangs hat im Wesentlichen die Vorteile wie vorhergehend beschrieben.

Das Verfahren kann die folgenden weiteren Schritte umfassen:
- Überprüfen durch eine Überprüfungseinheit, ob der Stromabnehmer mit AC-Strom beaufschlagt ist,
- Bei Wegfall der AC-Stromversorgung, insbesondere vor Wegfall der AC-Stromversorgung, beaufschlagen des Gleichspannungszwischenkreises mit Energie von der Energieversorgungsquelle, wobei die Energieversorgungsquelle im Stützbremsbetrieb ein generatorisch betriebener Traktionsmotor ist,
- Optional, Überprüfen durch die Überprüfungseinheit, ob der Stromabnehmer mit DC-Strom beaufschlagt ist,
- Optional, Beenden der Beaufschlagung des Gleichspannungszwischenkreises mit Energie von der Energieversorgungsquelle, wenn der Stromabnehmer mit DC-Strom beaufschlagt ist.

Durch die Überprüfung, ob der Stromabnehmer mit AC-Strom oder mit DC-Strom beaufschlagt ist, ist es möglich, das Verfahren automatisiert durchzuführen. Die Überprüfungseinheit meldet die erkannte Stromversorgung der Fahrzeugsteuerung. Dadurch wird sichergestellt, dass das Verfahren, wenn es benötigt wird, zeitnah und sicher ausgeführt wird und menschliche Fehler bei der Durchführung des Verfahrens im Wesentlichen ausgeschlossen werden können. Der Wegfall der AC-Stromversorgung kann durch den Lokführer aufgrund der äusseren Gegebenheiten manuell gemeldet werden oder durch geeignete Streckenmarkierungen automatisch erkannt werden.

Die Erfindung wird in den folgenden Figuren näher erläutert. Hierbei zeigt:
- Figur 1:: Einen Schaltplan eines Schienenfahrzeugs mit einer Systemwahlschalteranordnung im DC-Betrieb,
- Figur 2:: ein Schaltplan eines Schienenfahrzeugs mit einer Systemwahlschalteranordnung im AC-Betrieb,
- Figur 3:: einen Schaltplan eines Schienenfahrzeugs mit einer Systemwahlschalteranordnung und einer Verbindung zwischen der Drossel und dem Gleichspannungszwischenkreis im DC-Betrieb,
- Figur 4:: ein Schaltplan eines Schienenfahrzeugs mit einer Systemwahlschalteranordnung und einer Verbindung zwischen der Drossel und dem Gleichspannungszwischenkreis im AC-Betrieb,
- Figur 5:: einen Schaltplan eines Schienenfahrzeugs mit einer Systemwahlschalteranordnung und zwei Traktionsketten im AC-Betrieb,
- Figur 6:: einen Schaltplan eines Schienenfahrzeugs mit einer Systemwahlschalteranordnung und zwei Traktionsketten im DC-Betrieb,
- Figur 7:: ein Ablaufdiagramm zum Umstellen eines Schienenfahrzeugs von AC-Betrieb auf DC-Betrieb.

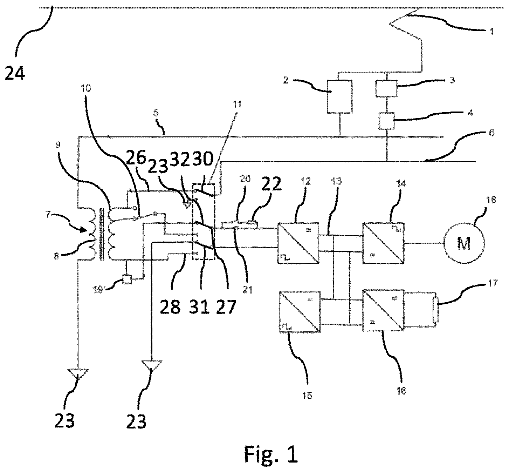

Figur 1 zeigt einen Schaltplan eines Schienenfahrzeugs (nicht dargestellt) mit einer Systemwahlschalteranordnung 11 im DC-Betrieb. Das Schienenfahrzeug (nicht dargestellt) ist über einen Stromabnehmer 1 mit der Fahrleitung 24 verbunden. Der Stromabnehmer 1 ist über einen AC-Hauptschalter 2 mit der AC-Dachleitung 5 verbunden. Die AC-Dachleitung 5 verbindet den Stromabnehmer 1 mit der Primärwicklung 8 des Transformators 7. Die Primärwicklung 8 des Transformators 7 ist mit der Masse 23 verbunden. Der Stromabnehmer 1 ist über den DC-Trennschalter 3 und den DC-Schnellschalter 4 mit der DC-Dachleitung 6 verbunden. Die DC-Dachleitung 6 ist über den DC-Systemschalter 30 mit der DC-Versorgungsleitung 26 verbunden. Die DC-Versorgungsleitung 26 verbindet den DC-Systemschalter 30 mit der Sekundärseite 9 des Transformators 7. Der DC-Systemschalter 30 ist Teil der Systemwahlschalteranordnung 11. Die Systemwahlschalteranordnung 11 umfasst ausserdem den Umschalter 31 und den AC-Systemschalter 32. Ein Ausgang der Sekundärwicklung 9 des Transformators 7 führt zu der Drossel 19 und anschliessend zu dem AC-Systemschalter 32. Ein weiterer Ausgang der Sekundärseite des Transformators 7 führt zu dem Umschalter 31. Die Drossel 19 ist mit dem AC-Systemschalter 32 verbunden. Ausserdem ist die Drossel 19 über den AC-Systemschalter 32 mit dem Linienschütz 21 verbunden. Parallel zum Linienschütz 21 ist das Vorladeschütz 20 mit dem Widerstand 22 ausgebildet. Das Linienschütz 21 ist über den Netzstromrichter 12 mit dem Gleichspannungszwischenkreis 13 verbunden. Der Umschalter 31 verbindet den Netzstromrichter 12 mit der Masse 23. An dem Gleichspannungszwischenkreis 13 ist der Netzstromrichter 12 sowie der Motorstromrichter 14 angeschlossen. An den Motorstromrichter 14 ist der Fahrmotor 18 angeschlossen. An den Gleichspannungszwischenkreis 13 sind ausserdem der Hilfsbetriebeumrichter 15 sowie der DC/DC-Stromrichter 16 angeschlossen. An den DC/DC-Stromrichter 16 ist der Bremswiderstand 17 angeschlossen. In der Figur 1 befindet sich das Schienenfahrzeug im DC-Betrieb. Im DC-Betrieb wird die Sekundärseite 9 des Transformators 7 über den DC-Systemschalter 30 mit DC-Strom versorgt. Ausserdem verbindet im DC-Betrieb der AC-Systemschalter 32 die Drossel 19 mit dem Linienschütz 21. Im DC-Betrieb ist ein Eingang des Netzstromrichters 12 über den Umschalter 31 mit der Erde 23 verbunden.

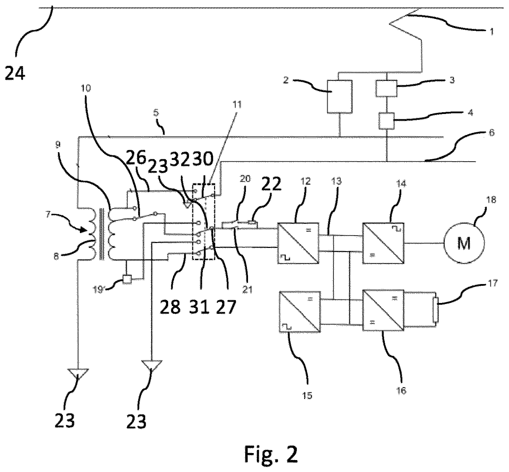

Die Figur 2 zeigt einen Schaltplan eines Schienenfahrzeugs (nicht dargestellt) mit einer Systemwahlschalteranordnung 11 im AC-Betrieb. Der Schaltplan des Schienenfahrzeugs (nicht dargestellt) ist analog zu der Figur 1 ausgebildet. Anders als in der Figur 1 befindet sich in der Figur 2 das Schienenfahrzeug (nicht dargestellt) im AC-Betrieb. Im AC-Betrieb ist die Systemwahlschalteranordnung 11 in der AC-Stellung angeordnet. Wenn die Systemwahlschalteranordnung 11 in der AC-Stellung angeordnet ist, verbindet der DC-Systemschalter 30 die DC-Dachleitung 6 mit der Erde 23. In der AC-Stellung verbindet der AC-Systemschalter 32 den Linienschütz 21 über den AC-Systemwahlschalter 10 mit der Sekundärseite 9 des Transformators 7. In der AC-Stellung verbindet der Umschalter 31 einen Eingang des Netzstromrichters 12 mit einem Ausgang der Sekundärseite 9 des Transformators 7.

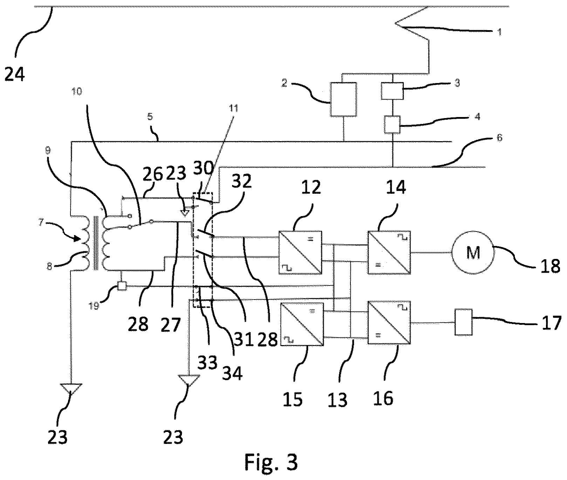

Die Figur 3 zeigt ein Schaltplan eines Schienenfahrzeugs (nicht dargestellt) mit einer Systemwahlschalteranordnung 11 analog zu der Figur 1. Anders als in der Figur 1 ist die Drossel 19 über den Drosselschalter 33 mit dem Gleichspannungszwischenkreis 13 verbunden. Die Drossel 19 kann Teil des Transformators 7 sein. Anders als in der Figur 1 ist der Gleichspannungszwischenkreis 13 über den Zwischenkreisschalter 34 mit der Erde 23 verbunden. In der Figur 3 befindet sich das Schienenfahrzeug im DC-Betrieb. Durch den AC-Systemschalter 32 kann der Netzstromrichter 12 mit der Sekundärseite 9 des Transformators 7 verbunden sein. Im DC-Betrieb ist der AC-Systemschalter 32 jedoch geöffnet und die Verbindung zwischen dem Netzstromrichter 12 und der Sekundärseite 9 des Transformators 7 ist durch den geöffneten AC-Systemschalter 32 unterbrochen. Auch das Minuspotential des Netzstromrichters 12 kann durch den Umschalter 31 mit einer Sekundärseite 9 des Transformators 7 verbunden sein. Im DC-Betrieb des Schienenfahrzeugs (nicht dargestellt) ist die Verbindung zwischen dem Netzstromrichter 12 und der Sekundärseite 9 des Transformators 7 jedoch durch den geöffneten Umschalter 31 unterbrochen.

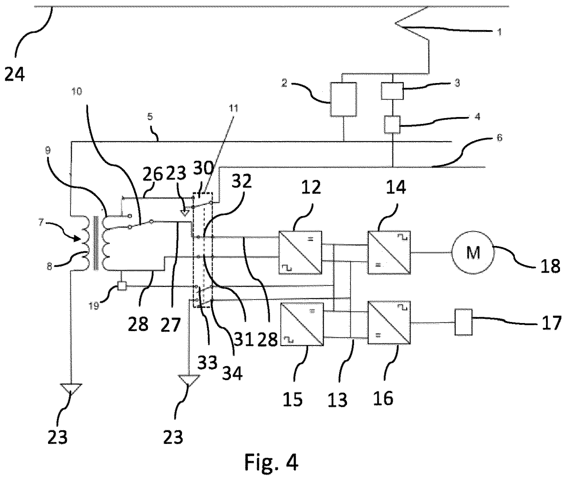

Die Figur 4 zeigt ein Schaltplan eines Schienenfahrzeugs (nicht dargestellt) mit einer Systemwahlschalteranordnung 11 analog zu der Figur 3. Anders als in der Figur 3 befindet sich das Schienenfahrzeug (nicht dargestellt) im AC-Betrieb. Im AC-Betrieb ist die DC-Dachleitung 6 durch den DC-Systemschalter 30 mit der Masse 23 verbunden. Im AC-Betrieb sind der Drosselschalter 33 sowie der Zwischenkreisschalter 34 geöffnet. Dadurch ist der Gleichspannungszwischenkreis 13 im AC-Betrieb nicht mit der Masse 23 oder der Drossel 19 verbunden. Der Umschalter 31 sowie der AC-Systemschalter 32 befinden sich im AC-Betrieb in der geschlossenen Position. Somit sind beide Potentiale des Netzstromrichters 12 im AC-Betrieb mit der Sekundärseite 9 des Transformators 7 verbunden.

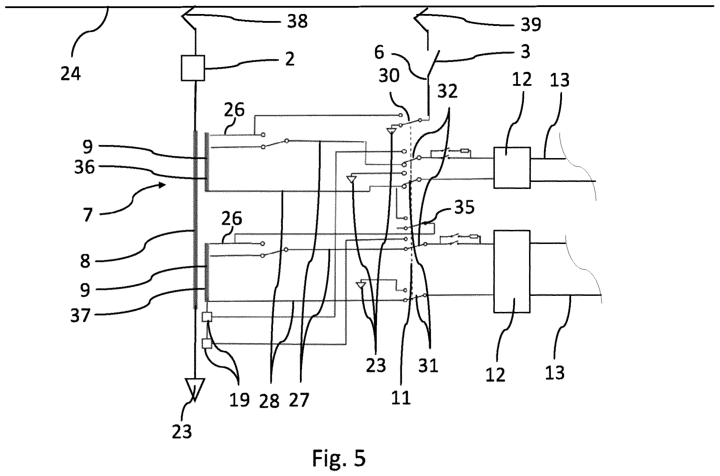

Figur 5 zeigt den Schaltplan eines Schienenfahrzeugs (nicht dargestellt) mit einer Systemwahlschalteranordnung 11 analog zu der Figur 2 im AC-Betrieb. Anders als in der Figur 2 umfasst das Schienenfahrzeug (nicht dargestellt) in der Figur 5 zwei Stromabnehmer, nämlich einen AC-Stromabnehmer 38 und einen DC-Stromabnehmer 39. Der AC-Stromabnehmer 38 ist über den AC-Hauptschalter 2 mit der Primärseite 8 des Transformators 7 verbunden. Der DC-Trennschalter 3 ist geöffnet. Somit ist die Verbindung zwischen dem DC-Stromabnehmer 39 und der Sekundärseite 9 des Transformators 7 durch den geöffneten DC-Trennschalter 3 unterbrochen. Der DC-Systemschalter 30 erdet die DC-Dachleitung 6. Anders als in der Figur 2 umfasst der Schaltplan in der Figur 5 zwei Traktionsketten mit jeweils einem Netzstromrichter 12 und jeweils einem Gleichspannungszwischenkreis 13. Somit sind in dem Schaltplan zwei Netzstromrichter 12 und zwei Gleichspannungszwischenkreise 13 dargestellt. Die beiden Traktionsketten sind identisch aufgebaut. In jeder Traktionskette ist eine Drossel 19 ausgebildet. Die Sekundärseite 9 des Transformators 7 umfasst eine erste Wicklung 36 und eine zweite Wicklung 37. Die erste Wicklung 36 und die zweite Wicklung 37 der Sekundärseite 9 des Transformators 7 sind über den Transformatorschalter 35 verbindbar.

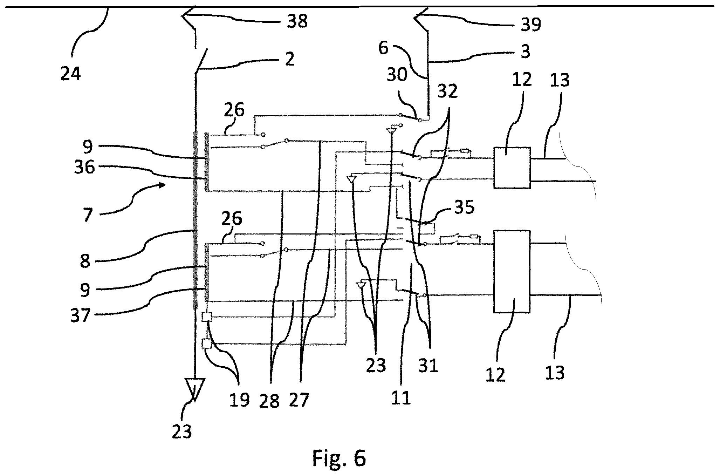

Die Figur 6 zeigt einen Schaltplan eines Schienenfahrzeugs (nicht dargestellt) mit einer Systemwahlschalteranordnung 11 analog zu der Figur 5. Anders als in der Figur 5 befindet sich das Schienenfahrzeug (nicht dargestellt) in der Figur 6 im DC-Betrieb. Im DC-Betrieb ist der AC-Hauptschalter 2 geöffnet. Der AC-Stromabnehmer 38 ist somit nicht durch den AC-Hauptschalter 2 mit der Primärseite 8 des Transformators 7 verbunden. Der DC-Systemschalter 30 verbindet die DC-Dachleitung 6 mit der DC-Versorgungsleitung 26. Somit ist der DC-Stromabnehmer 39 mit der Versorgungsleitung 26 und der ersten Wicklung 36 der Sekundärseite 9 des Transformators 7 verbunden. Die beiden AC-Systemschalter 32 verbinden jeweils einen Netzstromrichter 12 mit jeweils einer Drossel 19. Die beiden Umschalter 31 verbinden jeweils ein Potential der Netzstromrichter 12 mit der Masse 23. Der Transformatorschalter 35 verbindet die erste Wicklung 36 und die zweite Wicklung 37 der Sekundärseite 9 des Transformators 7.

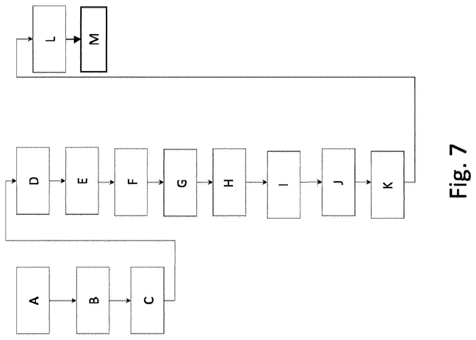

Figur 7 zeigt ein Ablaufdiagramm zum Umstellen eines Schienenfahrzeuges (nicht dargestellt) von AC-Betrieb zu DC-Betrieb. Das Verfahren umfasst die folgenden Schritte, welche in dem Verfahren hintereinander ausgeführt werden:
a) Stützbremsbetrieb ein,
b) Erkennen Wegfall AC-Stromversorgung,
c) Öffnen AC-Hauptschalter
d) Start Detektieren DC-Stromversorgung,
e) Sperren Netzstromrichter und Systemwahlschalter,
f) Linienschütz öffnen,
g) Ausschalten Fehlerdetektion Netzstromrichter,
h) Aufheben Sperre Systemwahlschalter,
i) Umschalten Systemwahlschalter von AC auf DC,
j) Aufheben Sperre Netzstromrichter,
k) Umschalten Netzstromrichter auf DC-Betrieb,
l) Wiedereinschalten Fehlerdetektion Netzstromrichter,
m) Schliessen DC-Schnellschalter und danach Schliessen Linienschütz.

## Patentansprüche

1. Schienenfahrzeug umfassend
- einen Stromabnehmer (1),
- einen Transformator (7) umfassend eine Primärseite (8) und eine Sekundärseite (9),
- eine AC-Leitung (5), insbesondere AC-Dachleitung (5), die den Stromabnehmer (1) mit dem Transformator (7) verbindet, wobei zwischen AC-Leitung (5) und Stromabnehmer (1) ein AC-Hauptschalter (2) angeordnet ist,
- eine DC-Leitung (6), insbesondere DC-Dachleitung (6), die den Stromabnehmer (1) mit einem Gleichspannungszwischenkreis (13) verbindet, wobei zwischen Stromabnehmer (1) und DC-Leitung (6) ein DC-Trennschalter (3), und insbesondere ein DC-Schnellschalter (4), angeordnet ist,
- einen Netzstromrichter (12), der zwischen Transformator (7) und Gleichspannungszwischenkreis (13) angeordnet ist,
- eine DC-Versorgungsleitung (26), die die DC-Leitung (6) mit der Sekundärseite (9) des Transformators (7) verbindet,
- eine AC-Versorgungsleitung (27), die die Sekundärseite (9) des Transformators oder eine Drossel (19) mit dem Netzstromrichter (12) verbindet,
- eine Umschaltleitung (28), die die Sekundärseite (9) des Transformators (7) oder die Drossel (19) mit dem Netzstromrichter (12) oder mit dem Gleichspannungszwischenkreis (13) verbindet,
- insbesondere eine Steuerung, durch die die Schalter des Schienenfahrzeuges steuerbar sind,
**dadurch gekennzeichnet, dass** eine Systemwahlschalteranordnung (11) ausgebildet ist, die ein Umstellen der Stromversorgung von AC nach DC ermöglicht, wobei die Systemwahlschalteranordnung (11) einen DC-Systemschalter (30) umfasst, der in der DC-Versorgungsleitung (26) angeordnet ist, einen AC-Systemschalter (32) umfasst, der in der AC-Versorgungsleitung (27) angeordnet ist und einen Umschalter (31) umfasst, der in der Umschaltleitung (28) angeordnet ist.

2. Schienenfahrzeug nach Anspruch 1, **dadurch gekennzeichnet, dass** der Umschalter (31) in einer AC-Stellung den Netzstromrichter (12) mit der Sekundärseite (9) des Transformators (7) verbindet und in der DC-Stellung der Netzstromrichter (12) mit der Masse (23) verbunden ist.

3. Schienenfahrzeug nach einem der vorhergehenden Ansprüche, **dadurch gekennzeichnet, dass** der AC-Systemschalter (32) in einer AC-Position den Netzstromrichter (12) mit der Sekundärseite (9) des Transformators (7) verbindet und in einer DC-Position den Netzstromrichter (12) mit der Sekundärseite (9) des Transformators (7) oder der Drossel (19) verbindet oder der AC-Systemschalter (32) in der AC-Position den Netzstromrichter (12) mit der Sekundärseite (9) des Transformators (7) verbindet und in der DC-Position die Verbindung von Netzstromrichter (12) und Sekundärseite (9) des Transformators (7) unterbrochen ist.

4. Schienenfahrzeug nach Anspruch 1, **dadurch gekennzeichnet, dass** der Umschalter (31) in einer AC-Position den Netzstromrichter (12) mit der Sekundärseite (9) des Transformators (7) verbindet und in einer DC-Position die Verbindung unterbricht.

5. Schienenfahrzeug nach einem der vorhergehenden Ansprüche, **dadurch gekennzeichnet, dass** der Gleichspannungszwischenkreis (13) mit einer Energieversorgungsquelle (16) verbunden ist, insbesondere mit einem Traktionsumrichter (16), mit dem von den Traktionsmotoren (18) im Bremsbetrieb generierter Wechselstrom in Gleichstrom für den Gleichspannungszwischenkreis erzeugbar ist.

6. Schienenfahrzeug nach einem der vorhergehenden Ansprüche, **dadurch gekennzeichnet, dass** ein Linienschütz (21) in der AC-Versorgungsleitung (27) ausgebildet ist, insbesondere zwischen Systemwahlschalter (11) und Netzstromrichter (12).

7. Schienenfahrzeug nach Anspruch 3, **dadurch gekennzeichnet, dass** parallel zum Linienschütz (21) ein Vorladeschütz (20) mit Widerstand (22) angeordnet ist.

8. Schienenfahrzeug nach einem der vorhergehenden Ansprüche, **dadurch gekennzeichnet, dass** der AC-Systemschalter (32) in einer DC-Position die AC-Versorgungsleitung (27) mit der Sekundärseite (9) des Transformators (7) verbindet und in der DC-Position den Gleichspannungszwischenkreis (13) erdet.

9. Schienenfahrzeug nach einem der vorhergehenden Ansprüche, **dadurch gekennzeichnet, dass** der Gleichspannungszwischenkreis (13) mit einem Hilfsbetriebeumrichter (15) verbunden ist.

10. Schienenfahrzeug nach einem der vorhergehenden Ansprüche, **dadurch gekennzeichnet, dass** zwischen AC-Systemschalter (32) und Sekundärseite (9) des Transformators (7) ein AC-Systemwahlschalter (10) angeordnet ist.

11. Schienenfahrzeug nach einem der vorhergehenden Ansprüche, **dadurch gekennzeichnet, dass** der Gleichspannungszwischenkreis (13) mit einem Bremswiderstand (17) verbunden ist, insbesondere mit einem DC/DC-Wandler (16) und einem Bremswiderstand (17).

12. Verfahren zum Umstellen eines Schienenfahrzeugs, insbesondere nach einem der vorhergehenden Ansprüche, von AC-Betrieb auf DC-Betrieb oder von DC-Betrieb auf AC-Betrieb, umfassend die folgenden Schritte für die Umstellung von AC-Betrieb auf DC-Betrieb:
- AC-Hauptschalter (2) öffnen,
- Linienschütz (21) öffnen,
- Fehlerdetektion des Netzstromrichters (12) ausschalten,
- Umschalten der Systemwahlschalteranordnung (11) von AC-Betrieb auf DC-Betrieb,
- Umschalten des Netzstromrichters (12) von AC-Betrieb auf DC-Betrieb,
- Fehlerdetektion des Netzstromrichters (12) einschalten,
- Linienschütz (21) schliessen,
- Schliessen des DC-Trennschalters (3) und insbesondere des DC-Schnellschalters (4),
oder für die Umstellung von DC-Betrieb auf AC-Betrieb:
- DC-Trennschalter (3) und insbesondere DC-Schnellschalter (4) öffnen,
- Linienschütz (21) öffnen,
- Umschalten der Systemwahlschalteranordnung (11) von DC-Betrieb auf AC-Betrieb,
- Umschaltbefehl an den Netzstromrichter (12) von DC-Betrieb auf AC-Betrieb,
- Linienschütz (21) schliessen,
- AC-Hauptschalter (2) schliessen,
wobei die Schalter (30, 31, 32) der Systemwahlschalteranordnung (11) beim Umstellen von AC-Betrieb zu DC-Betrieb und/oder beim Umstellen von DC-Betrieb zu AC-Betrieb im Wesentlichen gleichzeitig geschaltet werden.

13. Verfahren nach Anspruch 12, **dadurch gekennzeichnet, dass** das Verfahren die folgenden weiteren Verfahrensschritte enthält:
- Sperren des Netzstromrichters (12), bevor die Fehlerdetektion des Netzstromrichters (12) ausgeschaltet wird,
- Netzstromrichter (12) entsperren, nachdem die Systemwahlschalteranordnung (11) von AC-Betrieb auf DC-Betrieb umgeschaltet wurde,
- Optional, Sperren der Systemwahlschalteranordnung (11), bevor die Fehlerdetektion des Netzstromrichters (12) ausgeschaltet wird,
- Optional, Aufheben der Sperre der Systemwahlschalteranordnung (11), nachdem die Fehlerdetektion des Netzstromrichters (12) ausgeschaltet wurde.

14. Verfahren zum Umstellen eines Schienenfahrzeuges an einer Systemwechselstelle, insbesondere eines Schienenfahrzeuges nach einem der Ansprüche 1 bis 11, von AC-Betrieb auf DC-Betrieb oder von DC-Betrieb auf AC-Betrieb, bevorzugt Verfahren nach einem der Ansprüche 12 oder 13, **dadurch gekennzeichnet, dass** während der Umstellung eine Energieversorgungsquelle (16) einen Gleichspannungszwischenkreis (13) mit Energie versorgt, wobei die Energieversorgungsquelle (16) insbesondere ein generatorisch betriebener Traktionsmotor (18) ist.

15. Verfahren nach einem der Ansprüche 12 - 14, umfassend die folgenden weiteren Schritte:
- Überprüfen durch eine Überprüfungseinheit, ob der Stromabnehmer (1) mit AC-Strom beaufschlagt ist,
- Bei Wegfall der AC-Stromversorgung, Beaufschlagen des Gleichspannungszwischenkreis (13) mit Energie von der Energieversorgungsquelle (16), wobei die Energieversorgungsquelle (16) im Stützbremsbetrieb durch einen generatorisch betriebenen Traktionsmotor (18) mit Energie gespeist wird,
- optional, Überprüfen durch die Überprüfungseinheit, ob der Stromabnehmer (1) mit DC-Strom beaufschlagt ist,
- optional, Beenden der Beaufschlagung des Gleichspannungszwischenkreises (13) mit Energie von der Energieversorgungsquelle (16), wenn der Stromabnehmer (1) mit DC-Strom beaufschlagt ist.
